Europäisches Patentamt

European Patent Office

Office européen des brevets

(19)

(11) Veröffentlichungsnummer : **0 072 491**
**B1**

## (12) EUROPÄISCHE PATENTSCHRIFT

(45) Veröffentlichungstag der Patentschrift :
21.11.85

(21) Anmeldenummer : 82107031.5

(22) Anmeldetag : 04.08.82

(51) Int. Cl.⁴ : **B 60 B 33/02, B 62 B 5/04**

(54) **Bremse für rollbare Behälter.**

(30) Priorität : 08.08.81 DE 3131562

(43) Veröffentlichungstag der Anmeldung :
23.02.83 Patentblatt 83/08

(45) Bekanntmachung des Hinweises auf die Patenterteilung : 21.11.85 Patentblatt 85/47

(84) Benannte Vertragsstaaten :
CH FR GB IT LI NL

(56) Entgegenhaltungen :
EP-A- 0 015 774
CH-A-   350 774
GB-A- 1 159 716
GB-A- 1 338 643
GB-A- 1 377 155
GB-A- 1 484 013

(73) Patentinhaber : **Lermer GmbH**
**Theodor-Haubach-Strasse 7**
**D-6200 Wiesbaden (DE)**

(72) Erfinder : **Schmidt, Hubert**
**Sebastian Kneipp Strasse 2a**
**D-6277 Camberg (DE)**

(74) Vertreter : **Munderich, Paul, Dipl.-Ing.**
**Frankfurter Strasse 84**
**D-6466 Gründau-Rothenbergen (DE)**

Jouve, 18, rue St-Denis, 75001 Paris, France

## Beschreibung

Die Erfindung betrifft eine Bremse für rollbare Behälter, bei der zwei gleichachsig angeordnete Rollenpaare auf dem die Grundplatte des Behälters bildenden Bodenblech vorgesehen sind und bei der jedem der beiden Rollenpaare eine bis über dessen Rollen sich erstreckende, durch Pedal oder Hebel betätigbare, parallel zur Achse einer Lenkrollenpaar-Anordnung verlaufende Bremsstange zugeordnet ist.

Durch die DE-C-25 06 955 wurde eine Bremse dieser Art für Behälter bekannt, die, neben der Verriegelungsmöglichkeit mit einem auf der Rollfläche angeordneten Festpunkt, ein Abstoppen durch sich aufstellende Kippbremsdorne bzw. Bremsschuhe und die damit verbundene Aufhebung der rollenden Reibung zwischen Rollfläche und Behälter ermöglicht.

Eine praktisch ähnliche Konzeption wird durch die US-A-3 710 895 dargestellt.

Diese relativ komplizierten Einrichtungen sollen jedoch im Rahmen dieser Erfindung nicht angesprochen werden, da, unabhängig von dem technischen Aufwand, die bei dieser Ausbildung auftretende harte Abbremsung durch die sich aufstellenden Bremsdorne die Einhaltung der vorgeordneten Lagerung des Behälterinhaltes — insbesondere bei Flüssigkeiten — stark beeinträchtigen kann.

Die weiter in dieser Schrift genannte Verriegelung des Behälters am Boden stellt für den vorgesehenen Verwendungszweck keine Notwendigkeit dar.

Die Erfindung bezieht sich aus diesem Grund auf eine unmittelbar die Drehbewegung der Rollen abbremsende bzw. blockierende Bremseinrichtung, wobei der Begriff « blockieren » dabei als Beendigung eines kraftschlüssig ausgeübten, in der Regel mit einem Abbau kinetischer Energie verbundenen Bremsvorganges und nicht als ein Formschlußvorgang betrachtet werden muß.

Eine relativ einfache Vorrichtung zum (kraftschlüssigen) Blockieren der Fahrrollen von Servierwagen für Verkehrsflugzeuge wurde durch die DE-AS 25 08 950 bekannt, die mit einem unter einer oder aber beiden Stirnseiten des Servierwagens angeordneten Fußhebel und einer durch den Fußhebel zu betätigenden, im wesentlichen parallel zur Unterkante der Stirnseite des Wagens verlaufenden und sich über die Fahrrollen hin erstreckenden Blockierungsstange versehen ist.

Das Kriterium dieses Schutzbegehrens ist im wesentlichen, daß unter einer oder beiden Stirnseiten des Wagenrahmens eine Halterung befestigt ist, deren Seitenteile vertikal verlaufende Langlöcher aufweisen, in denen die Blockierungsstange gelagert und in der Halterung weiter ein Fußhebel befestigt ist, der in unmittelbarem Kontakt mit der Blockierungsstange, diese niederdrückend, gegen Federkraft nach unten führt.

Hierbei werden jeweils die gleichachsig angeordneten Einfach- oder Doppelfahrrollenpaare, entweder direkt oder unter Zwischenschaltung von Zwischengliedern, abgebremst und solange blockiert, bis die Belastung des Fußhebels aufgehoben wird.

Durch eine Weiterbildung ist vorgesehen, daß in der Halterung eine Druckplatte aus Kunststoff angeordnet ist, die das Einrasten bzw. die Fixierung des Fußhebels in seiner blockierenden Lage in einer Raststelle ermöglicht.

Nachteilig an dieser Ausbildung ist die fehlende Möglichkeit, alle vier Rollen gleichzeitig und wahlweise von der einen oder anderen Stirnseite des Behälters aus abzubremsen bzw. zu blockieren.

Darüberhinaus muß das für die Aufhebung der Blockierung empfohlene Vorgehen, nämlich den Bremshebel durch die Fußspitze anzuheben, als wesentlicher Nachteil betrachtet werden, da in aller Regel diese Bremsen durch Damen bedient werden.

Es ist der Erhaltung eines Damenschuhes zumindest nicht dienlich, wenn bei Aufhebung des an jeder Sitzreihe eines Verkehrsflugzeuges während der Mahlzeiten erforderlichen Stops jeweils das Oberleder des Schuhes im Bereich der Schuhsspitze beansprucht werden muß.

Ausgehend von der zuerst genannten Schrift ist es deshalb Aufgabe dieser Erfindung, eine einfache, besonders wirksame Bremse gemäß der eingangs beschriebenen Art zu nennen, deren verriegelte Stoppstellung für beide Rollenpaare ohne zusätzlichen Aufwand einstellbar und deren Entriegelung körpergerecht, d. h. im gleichen Richtungssinn wie die Einstellung des Bremsvorganges möglich ist.

Die erfindungsgemäße Lösung dieser Aufgabe bei einer gattungsgemäßen Bremse sieht vor, daß jeweils ein Tragflansch am Bodenblech zwischen den auf jeweils einer Achse befindlichen Lenkrollenpaar-Anordnungen angeordnet ist, in welchem konzentrisch jeweils eine mit zwei Mitnehmeraugen ausgerüstete Drehscheibe gelagert ist, dessen durch den Tragflansch tretender Teil als ringförmiger Drehkranz mit durch Ansatzflanken begrenzten Vertiefungen und anschließenden Auflaufschrägen ausgebildet ist, wobei hinsichtlich einer Lenkrollenpaar-Anordnung das erste Mitnehmerauge über ein Zugband und ein Hebelteil mit dem durch eine vor dem Tragflansch angeordnete Konsole getragenen Bremspedalhebel und das zweite Mitnehmerauge mit dem durch dieselbe Konsole getragenen Entriegelungshebel unabhängig auf einer durchgehenden Welle für sich betätigbar sind, und daß der Brems- bzw. Entriegelungshebel in Wirkverbindung mit der gekröpften Bremsstange steht, die mittig in Schlitzen eines Tragflansches geführt ist, die durch Drehung der Drehscheibe höhenverstellbar ist und deren federnd in Richtung zum Bodenblech abgestützten beiden Enden auf jeweils ein Bremselement einwirken.

Die erfindungsgemäße Ausbildung des jeweils mit Schlitzen zur Führung einer gekröpften Bremsstange ausgerüsteten Tragflansches zur Aufnahme einer in einen Drehkranz überführenden Drehscheibe, die seitlich austretenden Mitnehmeraugen und die Anordnung von begrenzten Vertiefungen im Drehkranz, die einseitig durch Ansatzflanken mit anschließenden Auflaufschrägen ausgebildet sind, bilden das Hauptteil der Bremse.

Der flache, die Drehscheibe aufnehmende Tragflansch erlaubt über die mit der Drehscheibe verbundenen Mitnehmeraugen eine unmittelbare Führung der Zugbänder zwischen zwei gegenüberliegenden, korrespondierenden Bremsanordnungen auf dem Bodenblech, so daß ein optimales Maß an Führungssicherheit dieser nur auf Zug beanspruchten Teile gegeben ist.

Die sich über einen weiten Bereich des Umfanges des Drehkranz erstreckende Hochlage für die Bremsstange ermöglicht deren sichere Verharrung in Bremslage, ohne Notwendigkeit in dieser besondere Raststellen anzuordnen.

Die Bremse kann nur durch Verdrehen des Drehkranzes, d. h. durch Niedertreten des Entriegelungshebels, entriegelt werden. Die gleiche **gesicherte Lage ist bei Einstellung der Tiefenlage** der Bremsstange, d. h. in gelöster bzw. entriegelter Stellung der Bremse gegeben.

In beiden Fällen ist nur ein Niedertreten des einen oder des anderen Pedales notwendig, so daß kein Pedal durch Schuhspitzen angehoben werden muß.

Die Ausbildung der Bremse als Vierrollenbremse bzw. Allradbremse erfordert lediglich die Verbindung der Mitnehmeraugen durch Zugbänder oder dergleichen.

Darüberhinaus bietet diese Ausbildung, die Konsolen oder Aufbauten im mittleren Bereich des Behälters auch bei Doppelbremsausbildung vermeidet, eine weitestgehende Bodenfreiheit, so daß diese in ihrer Manipulationsfähigkeit praktisch uneingeschränkt ist.

**Im Interesse der Beherrschung des Verschleißes und einer einfachen Wartung ist es vorgesehen, daß das ringförmige Planum des Drehkranzes der Drehscheibe durch eine dessen Vertiefung berücksichtigende auswechselbare, in der Regel aus Edelstahl bestehende, exakt mit der Ringform des Drehkranzes korrespondierende Verschleißscheibe abgedeckt ist.**

Eine besonders günstige Ausbildung der Verschleißscheibe ist dann gegeben, wenn diese beidseitig mit einem Steg über den zylindrischen Teil des Drehkranzes der Drehscheibe greift.

Bei Wahl einer entsprechenden Passung genügt es, die Verschleißscheibe lediglich ohne weitere Befestigung für das ringförmige Planum diesem aufzustecken.

Die Wegverhältnisse für die Zugstangen werden im wesentlichen dadurch bestimmt, daß der durch die Ausnehmungen im Tragflansch bestimmte Schwenkbereich der Mitnehmeraugen auf ca. 30° eingestellt ist, und daß die Vertiefungen im Drehkranz der Drehscheibe in einem Winkel von ca. 45° zur Verbindungslinie der Mitnehmeraugen ansetzen und sich über einen Zentriwinkel von ca. 60° erstrecken.

Zur unmittelbaren Ausbildung der Bremse wird weiter vorgeschlagen, daß der das Bremselement tragende, in der Rollentragkonstruktion angeordnete Druckbolzen an seinem zum Bodenblech gerichteten Ende einen Bund aufweist, dem eine, zwischen diese und dem Befestigungsflansch der Rollentragkonstruktion angeordnete Druckfeder anliegt.

Im Interesse der Vermeidung einer hohen Bauweise bzw. dicker Befestigungsflansche für die Rollentragkonstruktion wird vorgeschlagen, daß das Bodenblech und/oder der Befestigungsflansch der Rollentragkonstruktion jeweils eine Vertiefung zur zumindest partiellen Aufnahme der Dicke eines Endes der Bremsstange aufweist.

In diesem Zusammenhang empfiehlt es sich, die Bremsstange an ihren beiden Enden abzuflachen.

Es ist ferner von Vorteil, daß der Entriegelungshebel nach jeder Betätigung durch eine Torsionsfeder in Verbindung mit einem in der Konsole angeordneten Anschlag in seine Ausgangsstellung zurückführbar ist.

Die erfindungsgemäße Bremse wird durch die beigefügte zeichnerische Darstellung einer beispielsweisen Ausführung näher erläutert.

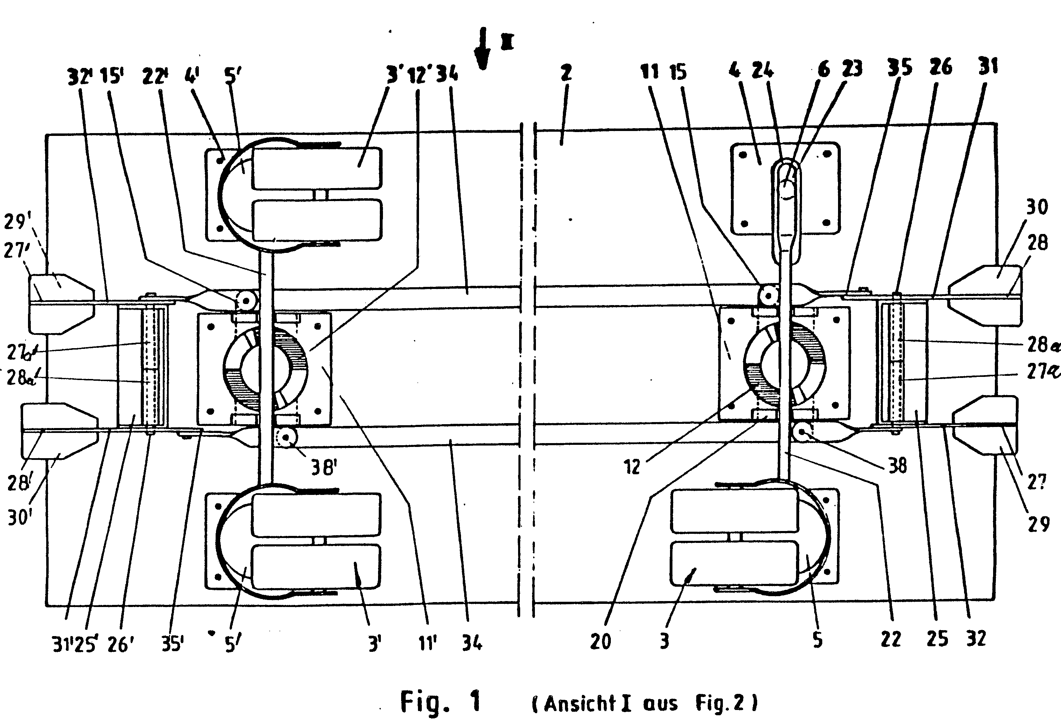

Figur 1 zeigt die Anordnung der Bremse auf dem Behälterboden, und zwar in Richtung der Ansicht I aus Figur 2.

Figur 2 zeigt die Anordnung der Bremse im Aufriß, und zwar in Richtung II aus Figur 1.

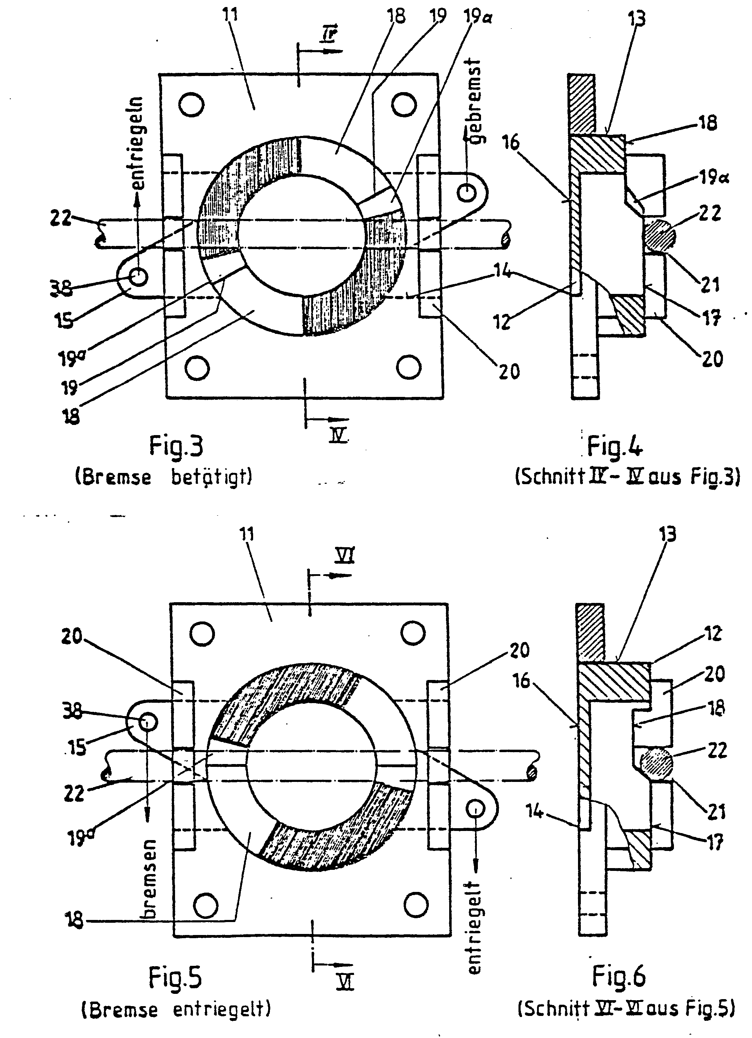

Figur 3 zeigt die Kombination aus Tragflansch, Drehscheibe und Drehkranz bei betätigbarer Bremse.

**Figur 4 zeigt den Schnitt IV-IV aus Figur 3.**

Figur 5 zeigt die Kombination nach Figur 3 bei entriegelter Bremse.

Figur 6 zeigt den Schnitt VI-VI aus Figur 5.

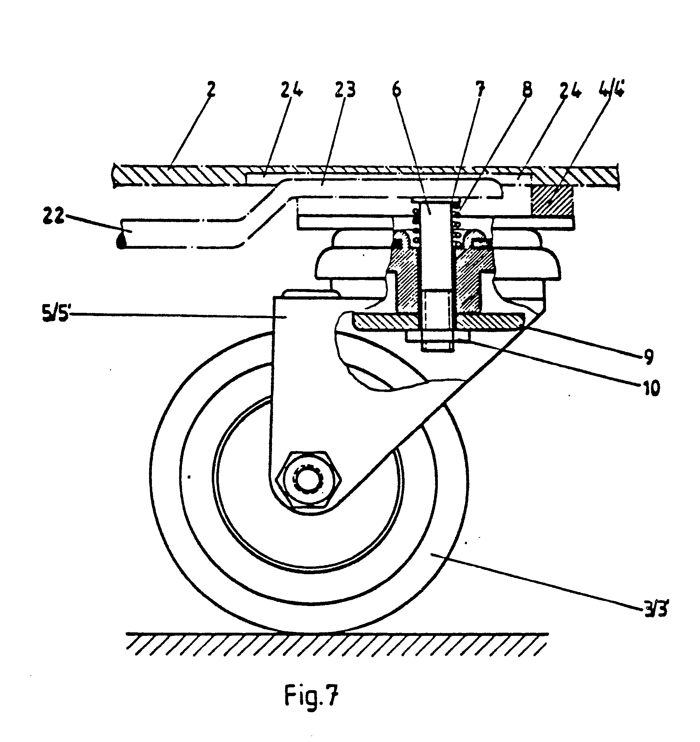

Figur 7 zeigt eine Rolle mit Anordnung des Bremselementes in Verbindung mit dem Boden.

Dem Bodenblech 2 des Behälters 1 sind zwei gleichachsig angeordnete Lenkrollenpaare 3 und **3' in üblicher Weise, d. h. paarweise zu einer Behälterstirnseite weisend,** verbunden, wobei durch den Befestigungsflansch 4/4' jeder Lenkrolle und durch die diesem angeschlossene Rollentragkonstruktion 5/5' ein durch eine Druckfeder 8 in axialer Richtung getragener Druckbolzen 6 entspannend in Richtung des Bodenbleches 2 geführt ist.

Die Druckfeder 8 ist dabei zwischen der Tragkonstruktion 5 und dem den Druckbolzen 6 nach oben abgrenzenden Bund 7 angeordnet. Der in Richtung zu den Rollen führende, mit einem Gewinde versehene Bereich des Druckbolzens 6, ist Träger eines, z. B. durch eine Mutterkombination 10, einstellbaren Bremselementes 9, das, im Falle dieses Beispieles, eine kreisrunde Bremsscheibe ist.

Zwischen den Befestigungsflanschen 4 und 4' der Lenkrollenpaare 3 und 3' ist mittig für die Führung einer parallel zum Bodenblech 2 verschwenkbaren Drehscheibe 12/12′ ein mit dem Bodenblech verbundener Tragflansch 11/11′ vorgesehen.

Der Tragflansch 11/11′ weist, neben einem zylindrischen Durchgang 13 für die Durchführung der in einen Drehkranz überführenden Drehscheibe 12/12′, zwei in gleicher Breite sich öffnende, gegenüberliegende Ausnehmungen 14 auf. Diese sind für die verschwenkbare seitliche Durchführung je eines der beiden der Drehscheibe 12/12′ über Losbolzen 38/38′ verbundenen Mitnehmeraugen 15/15′ vorgesehen, wobei diese praktisch unmittelbar über dem Bodenblech 2 gleiten und hierbei der durch die Ausnehmungen 14 geschaffene Schwenkbereich für die Mitnehmeraugen 15/15′ — und zwar quer zur Behälterlängsachse — auf jeder Seite insgesamt 30° beträgt.

Der durch den Durchgang 13 des Tragflansches 11/11′ führende Drehkranz der Drehscheibe 12/12′ weist in seinem parallel zur Basisfläche 16 der Drehscheibe 12/12′ liegenden Planum 17 zwei gegenüberliegende, in einem Winkel von 45° zur Lage der Mitnehmeraugen 15/15′ angeordnete Vertiefungen 18 auf, die sich über einen Zentriwinkel von jeweils 60° erstrecken und die durch Ansatzflanken 19 begrenzt sind. Hierbei sind jeweils zwei versetzt gegenüberliegende Ansatzflanken 19/19 als Auflageschräge 19a/19a ausgebildet.

Desweiteren ist der Tragflansch 11/11′ in Behälterlängsrichtung, diesen seitlich begrenzend, mit zwei entgegen dem Bodenblech 2 gerichteten Stegen 20 verbunden.. Jeder Steg ist mit einem offenen Schlitz 21 ausgebildet, wobei die Schlitze 21, in Verbindung mit ihrer Lage, Führung für die quer über das Zentrum der Drehscheibe 12/12′ zu den beiden Druckbolzen 6 verlaufende Bremsstange 22/22′ sind.

Die beiden Enden 23 der gekröpften Bremsstange 22/22′ sind abgeflacht und greifen zwischen die Tragflansche 4 bzw. 4′ und das Bodenblech 2 durch eine im Bodenblech angeordnete Vertiefung 24 und enden beidseitig jeweils auf dem Bund 7 des Druckbolzens 6.

Der Bremshebel 27/27′ und der Entriegelungshebel 28/28′ werden durch einen vor dem Tragflansch 11/11′ mittig zur nächstliegenden Behälterstirnseite am Bodenblech 2 und von diesem abweisend, angeordnete U-förmige Konsole 25 getragen, wobei diese Pedalhebel an einer durch die jeweilige Konsole 25/25′ führenden Welle 26/26′ über Schwenklagerhülsen 27a/27a′ und 28a/28a′ unabhängig betätigbar sind.

Jeder Pedalhebel besteht im wesentlichen aus einer Druckplatte 29/29′ oder 30/30′ und aus zwei parallel in geringem Abstand zueinander, auf jeweils einer Schwenklagerhülse 27a/27a′ oder 28a/28a′ angeordneten Hebelteilen 31/31′ oder 32/32′, die mit ihrem Zugendenkopf in Richtung der Tragplatte 11/11′ mit einem Winkel von 120° — ausgehend von den Tretschenkeln des Hebels — weisen.

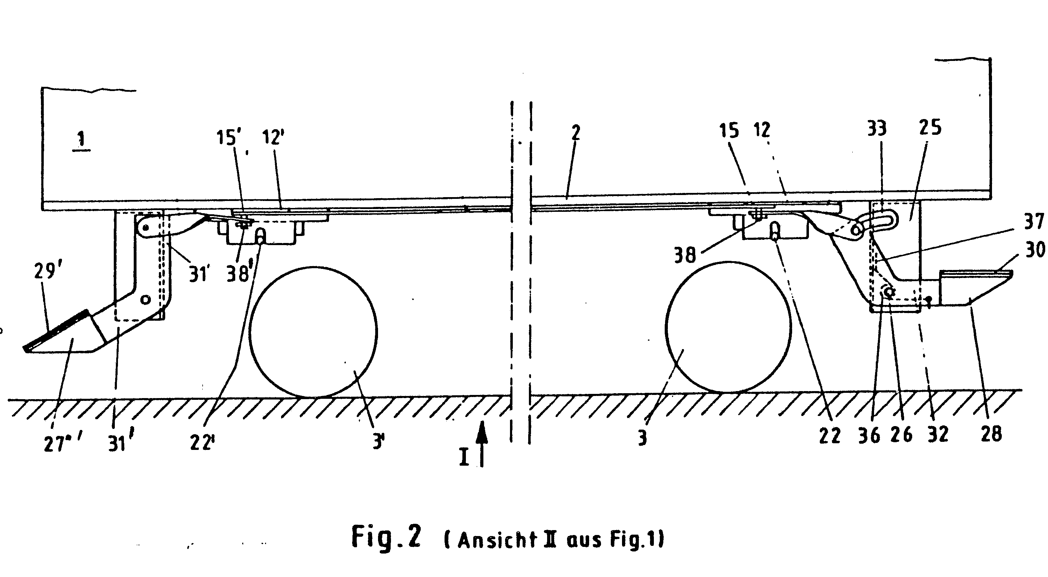

An den Hebelteilen 31/31′ des Entriegelungshebels 28/28a sind entgegen dem Zugbandende 35/35′ (siehe Figur 2) bogenförmige Kulissen 33 für die korrespondierende Schiebeführung des Zugbandende 35/35′ vorgesehen, in das zum gegenüberliegenden Mitnehmerauge 15/15′ gerichtete Zugband 34 bei Betätigung des Bremspedales 27/27′ gleitet, so daß die Normallage des Entriegelungshebels 28/28′ durch den Bremsvorgang nicht beeinflußt wird. Die Normallage wird durch eine Torsionsfeder 36, in Verbindung mit einem in der Konsole 25 angeordneten Anschlag 37, nach jeder Betätigung des Entriegelungspedales wieder eingestellt.

Die zu den Mitnehmeraugen 15/15′ führenden Zugbänder 34/34 sind geschränkte Stahlbänder, die mit ihren Enden 35/35′ jeweils zu den Hebelteilen 31 und den Hebelteilen 32 führen und mit diesen gelenkig verbunden sind.

Von den Mitnehmeraugen 15 ausgehend, dem sie jeweils durch einen Losbolzen 38 verbunden sind, führen, nach der erwähnten Schränkung der Zugbandenden 35/35′, in die dem Bodenblech aufliegenden Zugbänder 34/34 zu der korrespondierend auf der entgegengesetzten Schmalseite des Bodenbleches 2 angeordneten Bremseinrichtung, d. h. zu deren Mitnehmeraugen 15′ mit Losbolzen 38′ und im weiteren zu deren Pedalhebel 27a′ und 28a′, denen sie in der gleichen beschriebenen Weise verbunden sind.

Die Bremspedalhebel 27/27′ und Entriegelungshebel 28/28′ werden von jeder Behälterstirnseite aus in gleicher Anordnung betätigt, wobei vorzugsweise die Bremsseite rechts und die Entriegelungsseite links gewählt ist.

Die Zugbänder 34/34 können selbstverständlich mit den Zugbandenden 35 bzw. 35′ als Einheit ausgebildet werden. In diesem Fall werden lediglich die beiden Enden nach den Mitnehmeraugen 15/15′ geschränkt und leicht nach oben gebogen.

## Patentansprüche

1. Bremse für rollbare Behälter (1), bei der zwei gleichachsig angeordnete Rollenpaare (3, 3′) auf dem die Grundplatte des Behälters bildenden Bodenblech (2) vorgesehen sind und bei der jedem der beiden Rollenpaare (3, 3′) eine bis über dessen Rollen sich erstreckende, durch Pedal oder Hebel (27, 27′, 28, 28′) betätigbare, parallel zur Achse einer Lenkenrollenpaar-Anordnung (3, 3′) verlaufende Bremsstange (22) zugeordnet ist, dadurch gekennzeichnet, daß jeweils ein Tragflansch (11, 11′) am Bodenblech (2) zwischen den auf jeweils einer Achse befindlichen Lenkrollenpaar-Anordnungen (3, 3′) angeordnet ist, in welchem konzentrisch jeweils eine mit zwei Mitnehmeraugen (15, 15 ; 15′, 15′) ausgerüstete Drehscheibe (12, 12′) gelagert ist, dessen durch den Tragflansch (11, 11′) tretender Teil als ringförmiger Drehkranz mit durch Ansatzflanken (19 19) begrenzten Vertiefungen (18, 18) und anschließenden Auflaufschrägen (19a, 19a) ausgebildet ist, wobei hinsichtlich einer Lenkrollenpaar-Anordnung (3) das erste Mitnehmerauge (15) über ein Zugband (34) und ein Hebeteil (32) mit dem durch eine vor dem Tragflansch (11) angeordneten Konsole (25) getragenen Bremspedalhebel (27) und das zweite Mitnehmerauge (15) mit dem durch dieselbe Konsole (25) getragenen Entriegelungshebel (28) unabhängig auf einer durchgehenden Welle (26) für sich betätigbar sind, und daß der Brems- bzw. Entriegelungshebel (27, 28) in Wirkverbindung mit der gekröpften Bremsstange (22) steht, die mittig in Schlitzen (21) eines Tragflansches (11) geführt ist, die durch Drehung der Drehscheibe (12) höhenverstellbar ist und deren federnd in Richtung zum Bodenblech (2) abgestützten beiden Enden (23) auf jeweils ein Bremselement (9) einwirken.

2. Bremse für rollbare Behälter nach Anspruch 1, dadurch gekennzeichnet, daß das ringförmige Planum (17) des Drehkranzes der Drehscheibe (12) durch eine dessen Vertiefungen (18, 18') berücksichtigende, auswechselbare, in der Regel aus Edelstahl bestehende, exakt mit der Ringform des Drehkranzes korrespondierende Verschließscheibe abgedeckt ist.

3. Bremse für rollbare Behälter nach Anspruch 2, dadurch gekennzeichnet, daß die das ringförmige Planum (17) des Drehkranzes der Drehscheibe (12) abdeckende Verschleißscheibe beidseitig mit einem Steg über den zylindrischen Teil des Drehkranzes greift.

4. Bremse für rollbare Behälter nach einem der Ansprüche 1 bis 3, dadurch gekennzeichnet, daß der durch die Ausnehmungen (14) im Tragflansch (11) bestimmte Schwenkbereich der Mitnehmeraugen (15, 15) auf ca. 30° eingestellt ist, und daß die Vertiefungen (18, 18) im Drehkranz der Drehscheibe (12) in einem Winkel von ca. 45° zur Verbindungslinie der Mitnehmeraugen (15, 15) ansetzen und sich über einen Zentriwinkel von ca. 60° erstrecken.

5. Bremse für rollbare Behälter nach einem der Ansprüche 1 oder 2, dadurch gekennzeichnet, daß der das Bremselement (9) tragende, in der Rollentragkonstruktion (5) angeordneten Druckbolzen (6) an seinem zum Bodenblech (2) gerichteten Ende einen Bund (7) aufweist, dem eine, zwischen diese und dem Befestigungsflansch (4) der Tragkonstruktion (5) angeordnete Druckfeder (8) anliegt.

6. Bremse für rollbare Behälter nach Anspruch 1, dadurch gekennzeichnet, daß das Bodenblech (2) und/oder der Befestigungsflansch (4) der Rollentragkonstruktion (5) jeweils eine Vertiefung (24) zur zumindest partiellen Aufnahme der Dicke eines Endes (23) der Bremsstange (22) aufweist.

7. Bremse für rollbare Behälter nach einem der Ansprüche 1 oder 6, dadurch gekennzeichnet, daß die gekröpfte Bremsstange (22, 22') an ihren beiden Enden (23) abgeflacht ist.

8. Bremse für rollbare Behälter nach Anspruch 1, dadurch gekennzeichnet, daß der Entriegelungshebel (28, 28') nach jeder Betätigung selbsttätig durch eine Torsionsfeder (36) in Verbindung mit einem in der Konsole (25) angeordneten Anschlag (37) in seine Ausgangsstellung zurückführbar ist.

## Claims

1. A brake system for rolling containers (1) wherein two coaxially disposed pairs of rollers (3, 3') are provided on the bottom sheet (2) forming the base plate of the container, and wherein associated to each of the pairs of rollers (3, 3') is a pedal, or lever (27, 27', 28, 28'), operated brake rod (22) extending beyond the rollers thereof and extending in parallel to the axis of an arrangement of a pair of steering rollers (3, 3'), characterized in that a support flange (11, 11') is located on the bottom sheet (2) between the arrangements of pairs of steering rollers (3, 3') respectively provided on an axis, in which is concentrically disposed a swivel (12, 12') respectively provided with two drive eyes (15, 15 ; 15', 15'), with the portion projecting through the support flange (11, 11') being formed as an annular swing ring provided with depressions (18, 18) confined by connecting edges (19, 19) and followed by leading slopes (19a, 19a), in which, as regards the arrangement of one pair of steering rollers, the first drive eye (15), via a tension tie (34) and a lifting unit (32) along with the brake pedal lever (27) carried by a console (25) disposed ahead of the support flange (11) and the second drive eye (15) along with the unlocking lever (28) carried by the same console (25), on a continuous shaft (26) are operable independently and separately, and that the braking or releasing lever (27, 28) cooperates with the cranked brake rod (22) centrally guided in slots (21) of a support flange (11) which, by turning the swivel (12), is adjustable in height and the two ends (23) of which resiliently supported toward the bottom sheet (2) act on respectively one brake element (9).

2. A brake for rolling container according to claim 1, characterized in that the ring-shaped subgrade (17) of the swing ring of swivel (12) is covered by a replaceable wear plate generally of stainless steel conforming to the depressions (18, 18) thereof and precisely corresponding to the annular shape of the swivel ring.

3. A brake for rolling containers according to claim 2, characterized in that the wear plate covering the annular subgrade (17) of the swing ring of swivel (12) by a stem, extends on either side across the cylindrical portion of the swing ring.

4. A brake for rolling containers according to any one of claims 1 to 3, characterized in that the slew range of the drive eyes (15, 15) determined by the recesses (14) in the support flange (11) is adjusted to about 30°, and that the depressions (18, 18) in the swing ring of swivel (12) are at an angle of about 45° to the line of connection of the drive eyes (15, 15) and extend across a centering angle of about 60°.

5. A brake for rolling containers according to any one of claims 1 or 2, characterized in that the pressure bolt (6) carrying the brake element (9) and disposed in the roller bearing structure (5), at its end directed to the bottom sheet (2) comprises a collar (7), with a compressive spring (8) disposed between the latter and the attachment flange (4) of the support structure (5) being in abutment therewith.

6. A brake for rolling containers according to claim 7, characterized in that the bottom sheet (2) and/or the attachment flange (4) of the roller bearing structure (5) respectively comprise a depression (24) to receive at least partially the thickness of one end (23) of brake rod (22).

7. A brake for rolling containers according to any one of the preceding claims 1 to 6, characterized in that the cranked brake rod (22, 22') is truncated at both ends (23) thereof.

8. A brake for rolling containers according to claim 1, characterized in that the unlocking lever (28, 28'), after each operation, by way of a torsion spring (36) in conjunction with a stop (37) disposed in console (25) is automatically restorable into its initial position.

## Revendications

1. Ensemble de frein pour des récipients (1) roulants, dans lequel sont prévues deux paires de rouleaux (3, 3') disposées coaxialement sur la lame de fond (2) formant la plaque de fondation, et dans lequel est coordiné à chacune des paires de rouleaux (3, 3') une tige de frein (22) s'étendant à travers des rouleaux duquel et en parallèle à l'axe d'un ensemble de paires de rouleaux à commande et manœuvrable par pédale ou levier (27, 27', 28, 28'), caractérisé en ce qu'une bride portante (11, 11') est disposée sur la lame de fond (2) entre les ensembles (3, 3') des paires de rouleaux à commande se trouvant chaque fois sur un axe, dans laquelle est disposée concentriquement une plaque (12, 12') tournante ayant chaque fois deux taquets (15, 15 ; 15', 15') dont la partie s'étendant à travers de la bride portante (11, 11') est formée comme couronne de pivotement annulaire ayant des évidements (18, 18) limités par des bords à épaulement (19, 19) et suivis par des surfaces d'accès (19a, 19a) oblique, le premier taquet (15) vis-à-vis d'un ensemble (3) des paires de rouleaux à commande, par l'intermédiaire d'un lien en fer (34) et une partie de levage (32) avec le levier de pédale (27) supporté par une console (25) disposé avant la bride portante (11) et le second taquet (15) avec le levier à déverrouillage (28) porté par la même console (25) étant actionnable indépendamment et séparablement sur un arbre (26) continu, et que le levier de frein respectivement de déverrouillage (27, 28) est en coopération avec la tige de frein (22) coudée et guidée au centre des fentes (21) d'une bride portante (11) déplaçable en hauteur par rotation de la plaque (12) tournante et dont les deux extrémités (23) élastiquement supportées vers la lame de fond (2) actionnant chaque fois un élément de frein (9).

2. Ensemble de frein pour des récipients roulants selon la revendication 1, caractérisé en ce que la plate-forme (17) annulaire de la couronne de pivotement de la plaque (12) tournante est couverte par une plaque d'usure généralement en acier allié échangeable que considère les évidements (18, 18') de la plate-forme et que correspond précisément à la forme annulaire de la couronne de pivotement.

3. Ensemble de frein pour des récipients roulants selon la revendication 1, caractérisé en ce que la plaque d'usure couvrante la plate-forme (17) de la couronne de pivotement de la plaque (12) tournante à deux côtés s'étend à travers de la partie cylindrique de la couronne de pivotement par l'intermédiaire d'une traverse.

4. Ensemble de frein pour des récipients roulants selon une des revendications 1 à 3, caractérisé en ce que la portée de mouvement oscillant des taquets (15, 15) définie par les encoches (14) dans la bride portante (11) est adjustée environ à 30°, et que les évidements (18, 18) dans la couronne de pivotement de la plaque (12) tournante sont disposés à un angle d'environ 45° relatif à la ligne de jonction des taquets (15, 15) et s'étendent à travers d'un angle de centrage d'environ 60°.

5. Ensemble de frein pour des récipients roulants selon une des revendication 1 ou 2, caractérisé en ce que le piston de pression (6) portant l'élément de frein (9) et disposé dans l'appareil porteur des rouleaux (5) à l'extrémité dirigée vers sa lame de fond (2) comporte un collet (7) auquel est adjacent un ressort à pression (8) disposé entre ceci et la bride de fixation (4) de l'appareil porteur (5).

6. Ensemble de frein pour des récipients roulants selon la revendication 1, caractérisé en ce que la lame de fond (2) et/ou la bride de fixation (4) de l'appareil porteur des rouleaux (5) chaque fois comporte un évidement (24) pour la prise au moins partielle de la grosseur d'une extrémité (23) de la tige de frein (22).

7. Ensemble de frein pour des récipients roulants selon une des revendication 1 à 6, caractérisé en ce que la tige de frein coudé (22, 22') aux deux extrémités (23) est aplatie.

8. Ensemble de frein pour des récipients roulants selon la revendication 1, caractérisé en ce que le levier de déverrouillage (28, 28') après chaque actionnement par l'intermédiaire d'un ressort (36) de torsion en conjonction avec une butée (37) disposée dans la console (27) est automatiquement ramenable dans sa position de départ.

Fig. 1   (Ansicht I aus Fig. 2)

**Fig.2** ( Ansicht II aus Fig.1)

0 072 491

0 072 491

Fig.3
(Bremse betätigt)

Fig.4
(Schnitt IV–IV aus Fig.3)

Fig.5
(Bremse entriegelt)

Fig.6
(Schnitt VI–VI aus Fig.5)

3

Fig. 7